# EUROPEAN PATENT SPECIFICATION

(11) **EP 1 068 808 B1**
(45) Date of publication and mention of the grant of the patent: **11.08.2004**
(21) Application number: 00114109.2
(22) Date of filing: 16.02.1990
(51) Int. Cl.: A23L 3/3463, B65D 81/28, A23B 4/22

(54) **Method for surface treatment of foodstuffs**
Verfahren zur Oberflächenbehandlung von Nahrungsmitteln
Méthode pour le traitement de la surface des denrées alimentaires

(30) Priority: 21.02.1989 US 312840; 05.02.1990 US 472731
(43) Date of publication of application: 17.01.2001
(62) Divisional of application: 96112759.4
(73) Proprietor: VISKASE COMPANIES, INC., Chicago, Illinois 60638 (US)
(72) Inventor: Wilhoit, Darrel Loel, Worth, Illinois 60482 (US)
(74) Representative: Gesthuysen, von Rohr & Eggert

(56) References cited:
- WO-A-89/12399

## Description

The invention relates to a method for inhibiting or preventing growth of microbes such as bacteria, molds, and yeasts on food surfaces. "Food preservation", as that term is used herein, includes methods which guard against food poisoning as well as methods which delay or prevent food spoilage due to microbes. Food preservation keeps food safe for consumption and inhibits or prevents nutrient deterioration or organoleptic changes causing food to become less palatable.

"Food spoilage", as that term is used herein, includes any alteration in the condition of food which makes it less palatable including changes in taste, smell, texture or appearance. Spoiled food may or may not be toxic.

"Food poisoning", as that term is used herein, refers to mammalian disease caused by ingestion of food contaminated by pathogenic viruses, molds or bacteria and/or their toxins. Pathogen-contaminated food does not necessarily show any organoleptic sign of spoilage. Bacterial food poisoning may be caused by either infection of the host by the bacterial organism or by action of a toxin produced by the bacteria either in the food or in the host.

Prevention of food spoilage and food poisoning has been attempted throughout history often through trial and error. The early attempts have resulted in the adoption of such food preservation methods as the drying, salting and/or smoking of foods in order to preserve them. It has been relatively recent in recorded history that food preservation has been placed upon a scientific foundation. In the nineteenth century, work of such scientists as Louis Pasteur and Robert Koch elucidated the bacterial causes of food poisoning and spoilage and provided new methods of identifying pathogenic bacteria and of preserving food.

Present food technologists utilize an array of physical, chemical, and biological processes and agents to preserve food and prevent the transmission of disease via foodstuffs. In addition to such processes as irradiation, fermentation, pasturization, control of temperature, pH and/or water activity, a plethora of chemical agents exist. These agents include antioxidants to prevent chemical degradation of food, as well as compositions which kill or inhibit deleterious bacteria and/or other microbes thereby preserving food i.e. preventing both spoilage and the transmission of disease. Commonly employed antimicrobial chemical agents include nitrites, nitrates, sulphur dioxide, sulfites, and acids such as acetic, propionic, lactic, benzoic, and sorbic acid and their salts, wood smoke and liquid smoke, and antibiotics such as natamycin and nisin.

Prevention of food poisoning is of paramount importance in the food processing industry. Concern for food safety has led most countries to heavily regulate the food industry to ensure public health. Also, manufacturers of processed food invest considerable resources to ensure the safety of their products. Despite these efforts, food poisoning still occurs. Many instances of food poisoning are attributed to bacteria such as Salmonella, Clostridium, and Staphylococcus among others.

Of rising concern is the relatively recent discovery in the food processing industry of widespread Listeria contamination of poultry and processed foods such as wieners, other sausages, cheese, dairy products including novelty ice cream, and seafood. Of particular concern is the recent evidence that pasteurized and fully cooked processed foods are being contaminated with microbes such as Listeria monocytogenes following cooking or pasteurization and prior to packaging for point of sale. Such contamination is typically surface contamination believed to be caused by contact of microbes with food surfaces subsequent to heat treatment (i.e. cooking or pasteurization). Microbes such as Listeria may be airborne (i.e. carried by dust) or present on food contact surfaces such as processing equipment.

In the 1980's several outbreaks of food poisoning have been reported worldwide in which the causative agent is suspected to be or has been identified as Listeria contaminated food. Outbreaks of listeriosis (infection by Listeria bacteria) in humans have been reported in Massachusetts, California, and Pennsylvania in the U.S.A. and also in Canada, and Switzerland. These outbreaks have been attributed to ingestion of Listeria contaminated food such as coleslaw, cheese made from raw milk, surface ripened soft cheeses, and salami. Hundreds of people have been affected with a mortality rate of up to about one third of those affected. Particularly susceptible to the disease (which is contagious) are pregnant women, fetuses, newborn and infant children as well as adults with compromised immune systems e.g. adults under treatment with immunosuppressive drugs such as corticosteroids. Listeriosis is a serious disease which may cause meningitis, spontaneous abortion, and perinatal septicemia. Although treatable with early diagnosis, untreated listeriosis exhibits a high mortality rate.

Food preservation by inhibition of growth of Listeria monocytogenes is difficult. Listeria can reportedly reproduce and grow both aerobically and anaerobically, at pHs above 4.85 and over a wide range of temperatures which can be as low as 3°C and as high as about 45°C. This means that Listeria can grow at normal refrigeration temperatures. Listeria has also been reported as being able to grow in a water solution of up to 10% salt. Fortunately, cooking or pasteurization kills Listeria. Unfortunately, microorganism contamination may occur following pasteurization by the processor. Many people eat processed foods after a significant period of time has elapsed from a first cooking or pasteurization by the food manufacturer thereby permitting bacteria introduced by post-pasteurization contamination to grow. Since this food consumption may occur without reheating the processed food to sufficient temperatures for sufficient time to kill any microbes (such as Listeria) which may have been introduced subsequent to initial cooking, there is a risk of food poisoning. The present invention seeks to ameliorate the aforementioned risk.

Document WO 89/12399 Al describes bacteriocin composition comprising lanthionine containing bacteriocins (such as nisin) and a chelating agent. This document shows in-vitro effects of said compositions against different bacteria.

The document GB-A-940 379 describes preservatives compositions containing p-hydroxybenzoic acid esters and its use for food preservation.

An object of the invention is to kill, inhibit or prevent the growth of pathogenic microorganisms on the surface of a foodstuff by a method of transferring an antimicrobial agent to a surface of a foodstuff in a controlled amount.

Another object of the invention is to increase shelf life of processed foods by application of a synergistic mixture, preferably a liquid or a suspension, of a Streptococcus lactis-derived (or synthetic equivalent) bacteriocin and a chelating agent.

Thus, the present invention provides a method of increasing the shelf-life of processed foods, as defined in claim 1. Further embodiments are comprised by the respective dependent claims.

The foregoing objects and others which will become apparent from that which follows may be achieved by treating a foodstuff, i.e. a foodstuff surface, with an antimicrobial agent, a chelating agent such as EDTA or citric acid, in combination with the Streptococcus-derived bacteriocin nisin. Treatment is performed by spraying. The antimicrobial agent remains on the foodstuff surface in an effective amount to kill, prevent or inhibit growth of either food spoilage organisms or pathogenic microorganisms such as Listeria thereon.

The bactericidal composition used according to the present invention comprises the heat-resistant, Streptococcus-derived bacteriocin (or synthetic equivalent) antibacterial agent nisin. This agent is preferably effective against growth of gram positive bacteria, especially Listeria monocytogenes, and is heat resistant.

It is not necessary that each and every one of the above objects be present in all embodiments of the invention; it is sufficient that the invention may be advantageously employed.

Fundamental to the composition of the invention is the synergistic combination of a sequestering or chelating agent such as an EDTA salt or citric acid with the Streptococcus-derived bacteriocin (or synthetic equivalent) nisin. A liquid mixture or suspension of nisin and chelating agent is especially preferred.

A fundamental aspect of one method of the present invention is the protection of the foodstuff surface for a substantial period of time after treatment.

A fundamental aspect of one embodiment of the inventive film is the use of the heat resistant antimicrobial agent nisin which is effective against bacteria after pasteurization or heat treatment.

An antimicrobial composition comprising a synergistic combination of the Streptococcus-derived bacteriocin nisin (or a synthetic equivalent) and a chelating agent such as citric acid has been discovered to have unexpectedly good bactericidal properties especially against pathogenic bacteria such as Listeria monocytogenes. Additionally, such a composition surprisingly is able to prolong food shelf life by preventing food spoilage for a longer period of time than would be expected based upon the effectiveness of either component alone.

Nisin is the used bacteriocin. Nisin is a polypeptide bacteriocin produced by the lactic acid bacteria, Streptococcus lactis Group N.

Nisin is reportedly a collective name representing several closely related substances which have been designated A, B, C, D and E nisins having a similar amino acid composition. The structure and properties of nisin are further discussed in the article by E. Lipinska, entitled "Nisin and Its Applications", The 25th Proceedings of the Easter School in Agriculture Science at the University of Nottingham, 1976, pp. 103-130 (1977), which article is hereby incorporated by reference. The World Health Organization Committee on Biological Standardization has established an international reference preparation of nisin, and the international unit (IU hereinafter) is defined as 0.001 mg of this preparation. NISAPLIN is the brand name for a Nisin concentrate containing 1 million IU per gram which is commercially available from Aplin & Barrett Ltd., Trowbridge, Wiltshire, England.

Nisin is a known food preservative which is also known to be heat-stable, acid-stable and active against gram-positive bacteria. Nisin is used as a food preservative in dairy products and vegetables usually in conjunction with heat treatment. Nisin also occurs naturally in raw milk and has been used in heat processing of meat pastes. Nisin is considered to be nontoxic with toxicological data indicating no adverse effect at levels of 3.3 million IU per Kg of body weight. Nisin reportedly can stand heating to 121°C without loss of activity. Although some loss of activity may be expected when used with processed foods, this may be ameliorated e.g. by increasing the amount of nisin applied. Effective levels of nisin to preserve foodstuffs reportedly range from 25-500 IU/g or more.

Suitable chelating (sequestering) agents include EDTA, citric acids or their salts.

These sequestering agents are useful in food processing in their salt forms which are commonly alkali metal or alkaline earth salts such as sodium, potassium or calcium or quaternary ammonium salts. Sequestering compounds with multiple valencies may be beneficially utilized to adjust pH or selectively introduce or abstract metal ions e.g. in a food system coating. Additional information on sequestering and chelating agents is disclosed in T. E. Furia (Ed.), CRC Handbook of Food Additives, 2nd Ed., pp. 271-294 (1972, Chemical Rubber Co.), and M.S. Peterson and A.M. Johnson (Eds.), Encyclopedia of Food Science, pp. 694-699 (1978, AVI Publishing Company, Inc.) which articles are both hereby incorporated by reference.

The terms "chelating agent" and "sequestering agent" are used herein as synonyms and are defined as organic or inorganic compounds capable of forming coordination complexes with metals.

The used chelating agents are nontoxic to mammals and include aminopolycarboxylic acids and their salts such as ethylenediaminetetraacetic acid (EDTA) or its salts (particularly its di- and tri-sodium salts), and hydrocarboxylic acids and their salts such as citric acid.

Mixtures of the Streptococcus-derived bacteriocin nisin with one or more chelating agents may be usefully employed according to the present invention. Such mixtures may be solid in liquid suspensions or solutions. Unless otherwise noted, use of the term "solution" herein includes not only solids or liquids dissolved in a liquid but also solid-in-liquid suspensions or mixtures. Suitable solvents, diluents or carriers for the mixture of chelating agent and bacteriocin are water, alcohols, propylene glycol, oils such as mineral, animal or vegetable oil, glycerine or lecithin.

Although the commercially available bacteriocins may contain dairy products it may be advantageous for the bactericidal composition or food preservation preparation of the present invention to contain no added dairy products such as cheese, whey, curds or calcium-containing milk-based solids. It has been reported that calcium and magnesium ions may inactivate nisin. It may be, without wishing to be bound by the belief, that agents which chelate calcium and/or magnesium may be particularly advantageous. Mixtures of the present invention containing a mixture of bacteriocin and chelating agent are applied to foodstuffs including dairy products and nondairy products such as sausages, other meats, vegetables and fruits by spraying. Such solutions may be formulated with widely varying pHs. Acidic solutions are used to enhance or maintain the antibacterial effective of these solutions. Solutions having a pH less than or equal to about 6 are preferred, and less than or equal to 5 especially preferred. Amounts of the bacteriocin and chelating agent components may vary depending upon such factors as: type of bacteriocin type of chelating agent, pH, other constituents present (e.g. type of solution solvent), application i.e. type of foodstuff to which the materials are being applied, how applied (e.g. surface coating, subsequent processing conditions (e.g. heat treatment), a desired time period of effectiveness to kill or inhibit bacteria, and type of bacteria the foodstuff is being protected against, etc. One of ordinary skill in the art may determine appropriate amounts of bacteriocin and chelating agent without undue experimentation. Water is the preferred solvent for preparing a solution. Suitable amounts of bacteriocin in a mixture for treating foodstuffs such as sausage include from 5 to 250 ppm bacteriocin (by weight of total mixture) or more. Amounts less than 5 ppm are workable, but depending upon use may be less effective than higher concentration. Amounts greater than 250 ppm are also workable, but increasing concentrations have the disadvantage of increasing costs due to the expense of the bacteriocin. Concentrations between 50 and 150 ppm have been found to be effective and inexpensive, with concentrations of 150 ppm or more very effective at killing or inhibiting such pathogenic bacteria as Listeria monocytogenes e.g. on cooked frankfurter surfaces. The solution may be used against other bacteria and is especially effective against gram positive bacteria. The amounts of chelating agent used may vary widely e.g. amounts between 0.2 to 0.8 or 3.0 weight percent or more may be usefully employed. The composition may also contain other antimicrobial or antibacterial agents, or other additives such as colorants and flavorants e.g. gaseous or liquid smoke.

Nisin is resistant to destruction or inactivation by heat treatment such as cooking or pasteurization temperatures and times. This is necessary in order to survive heat treatment of the foodstuff within a packaging film and to be effective subsequent to the heat treatment and removal of the film.

"Heat resistant", as that term is used herein, means that the antimicrobial agent withstands destruction, inactivation or losses due to heat treatment, e.g. by pasteruization or cooking, such that following heat treatment sufficient agent remains which is effective to kill, inhibit or prevent growth of microorganisms on foodstuffs to which it is applied. It should be understood that partial losses in the amount of agent or agent effectiveness may occur and that partial inactivation may also occur. However, it is sufficient that the remaining active agent be capable of protecting the foodstuff surface against pathogenic organisms such as Listeria.

According to the present invention, the antibacterial composition is applied to a foodstuff directly by spraying onto the foodstuff surface.

Therefore, the transferred or applied agent should be present in a sufficient amount and remain sufficiently effective following heat treatment, processing and casing removal to kill, inhibit or prevent growth of microbes, preferably Listeria monocytogenes for a sufficient length of time. Advantageously, the agent would remain effective through the normal "sell by" or "expiration" date during which the food product is offered for sale by the retailer. Preferably, the effective time would extend past opening of the package by the consumer until the end of normal freshness period when food spoilage becomes apparent. For skinless wieners typical times are: about ten minutes to one hour from casing removal to consumer packaging, about thirty days to sixty days from consumer packaging through normal retail sale; and about seven days or more from opening of consumer package under normal refrigerated storage and use. In any case, the desired lengths of time and normal shelf life will vary from foodstuff to foodstuff and those of ordinary skill in the art will recognize that packaging times and shelf-life times will vary depending upon the type of foodstuff (e.g. beef wieners, poultry, or cheese), the size of the foodstuff, the number of pieces packaged (consumer size or institutional size package) storage temperatures, processing conditions and packaging equipment.

The above example is exemplary and should not be taken as limiting the invention to use with wieners. The invention is applicable to any foodstuff particularly those which may benefit from application of a controlled amount of an antimicrobial agent to the foodstuff surface, particularly an antibacterial agent. It is contemplated that the method of the invention has applicability to both animal-derived and plant-derived foodstuffs including but not limited to sausages of all types (such as beef, pork, chicken, turkey, fish, etc.) primal and subprimal cuts of meat, luncheon meats, hams, lamb, steak, hamburger, and poultry including chicken, turkey, duck, goose, as well as fish, and dairy products such as semi-soft and hard cheeses, processed cheese, and vegetable products including lettuce, tofu, coleslaw, soybean derived protein substitutes for meat, etc.

The method of the present invention utilizes the antimicrobial, i.e. antibacterial, heat resistant agent nisin. Nisin is a polypeptide bacteriocin as described above.

The invention will now be more clearly understood by reference to the following examples which are set forth as being merely illustrative of the invention and which are not intended, in any manner, to be limitative thereof. Unless otherwise indicated, all parts and percentages are by weight . Bacterial plate counts are an arithmatic average for three plates unless otherwise indicated. Estimated plate counts were made by generally accepted procedures in the microbiological art.

### Examples 1-28

The effectiveness of various test solutions and concentrations of the antimicrobial agents nisin (inventive) and pediocin (comparative) were examined by a liquid assay method against growth of pathogenic bacteria such as the gram-positive bacteria Listeria monocytogenes. Growth of total aerobic bacteria was also measured and the effectiveness similarly examined. Use of the chelating agents ethylenediaminetetraacetic acid (disodium salt), citric acid, and cyclodextrin were also examined alone and with various concentrations of nisin or pediocin.

These examples were conducted using aseptic techniques well known to those skilled in the art of microbiology. Sterilized DIFCO brand tryptose broth at double strength was innoculated with at least about 10,000 colony forming units (cfu) per ml. of a mixture of two pathogenic strains of food isolated Listeria monocytogenes serotype 4b. This innoculated broth was then added to test tubes containing double strength antimicrobial test solutions using equal portions of innoculated broth and test solution. The test tubes were then capped and the contents thoroughly mixed. Tables 1a and 1b list test solution components and amounts. Following the test, the pH was measured for similarly mixed solutions of uninnoculated broth and test solutions with the pH values also reported in Tables 1a and 1b. The amounts for the test solution components were calculated based on a "double strength" solution which was then diluted with an equal volume of innoculated broth as described above. The amounts listed in Tables 1a and 1b
were calculated assuming equal weights for equal volumes of the innoculated broth and the test solutions. The mixed innoculated test solutions were made in triplicate and incubated without agitation at about 30°C. For each test sample, an aliquot of 0.3 ml was aseptically withdrawn by pipet directly following mixing (zero (0) hours) as well as at 4, 8, 24 and 48 hours. Directly following removal, these aliquots were plated out on LPM agar and tryptic soy agar plates according to standard plate count procedures known to those skilled in the art of microbiology to determine Listeria and total aerobic bacterial counts. The selective listeria count was made using the U.S. Department of Agriculture (USDA) Food Safety and Inspection Service (FSIS), Microbiology Division method entitled, "FSIS Method for the Isolation and Identification of Listeria Monocytogenes From Processed Meat and Poultry Products" (For Use in Interim Laboratory Recognition Program) as described in the above titled paper, dated November 4, 1988 by A. B. Moran and dated November 8, 1988 by R. W. Johnston of FSIS and available from the FSIS which is hereby incorporated by reference. The bacterial count results for particular test solution components and concentrations are reported in Tables 1a and 1b as an arithmic average bacterial count of colony forming units (cfu) per ml for three replicate plates.

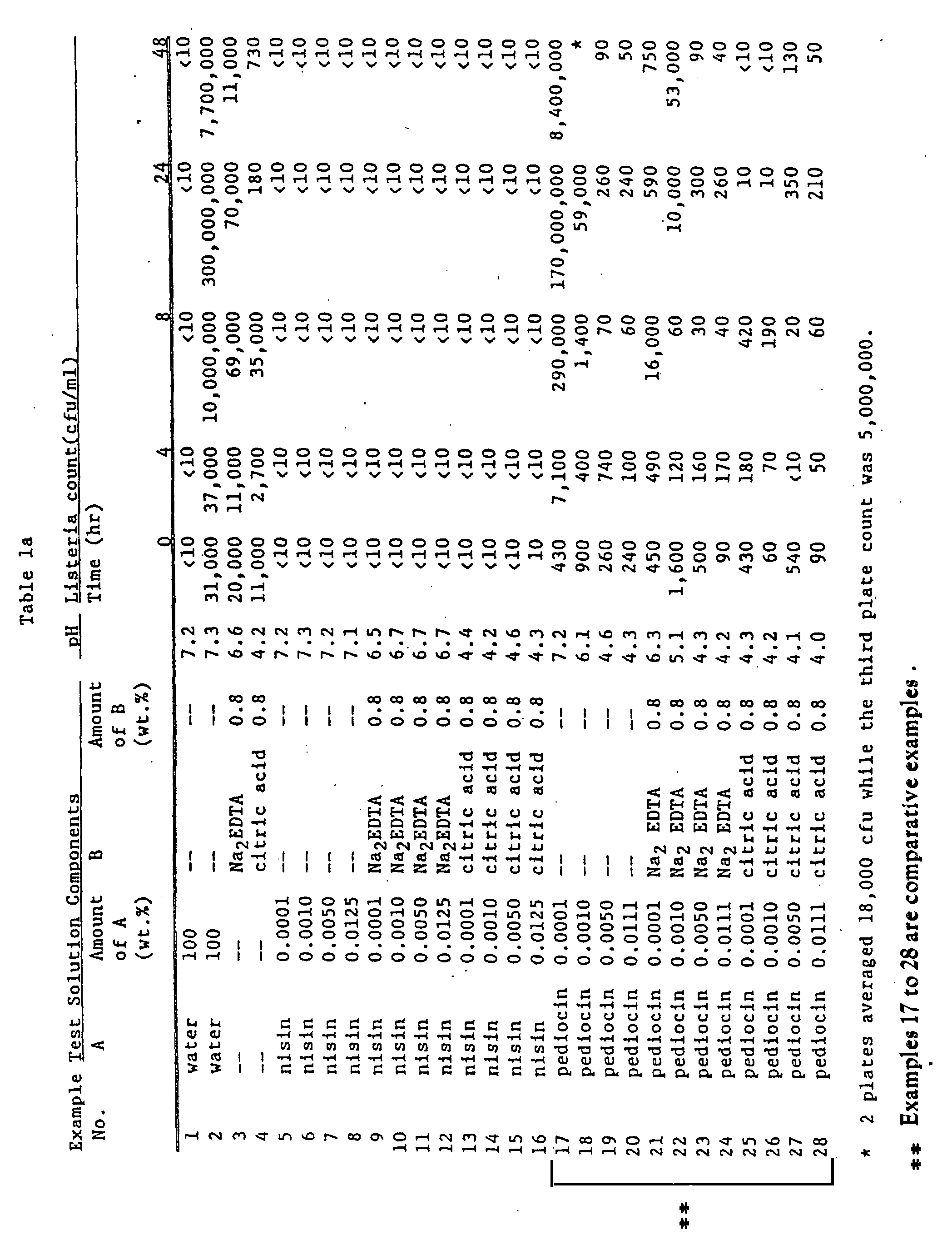

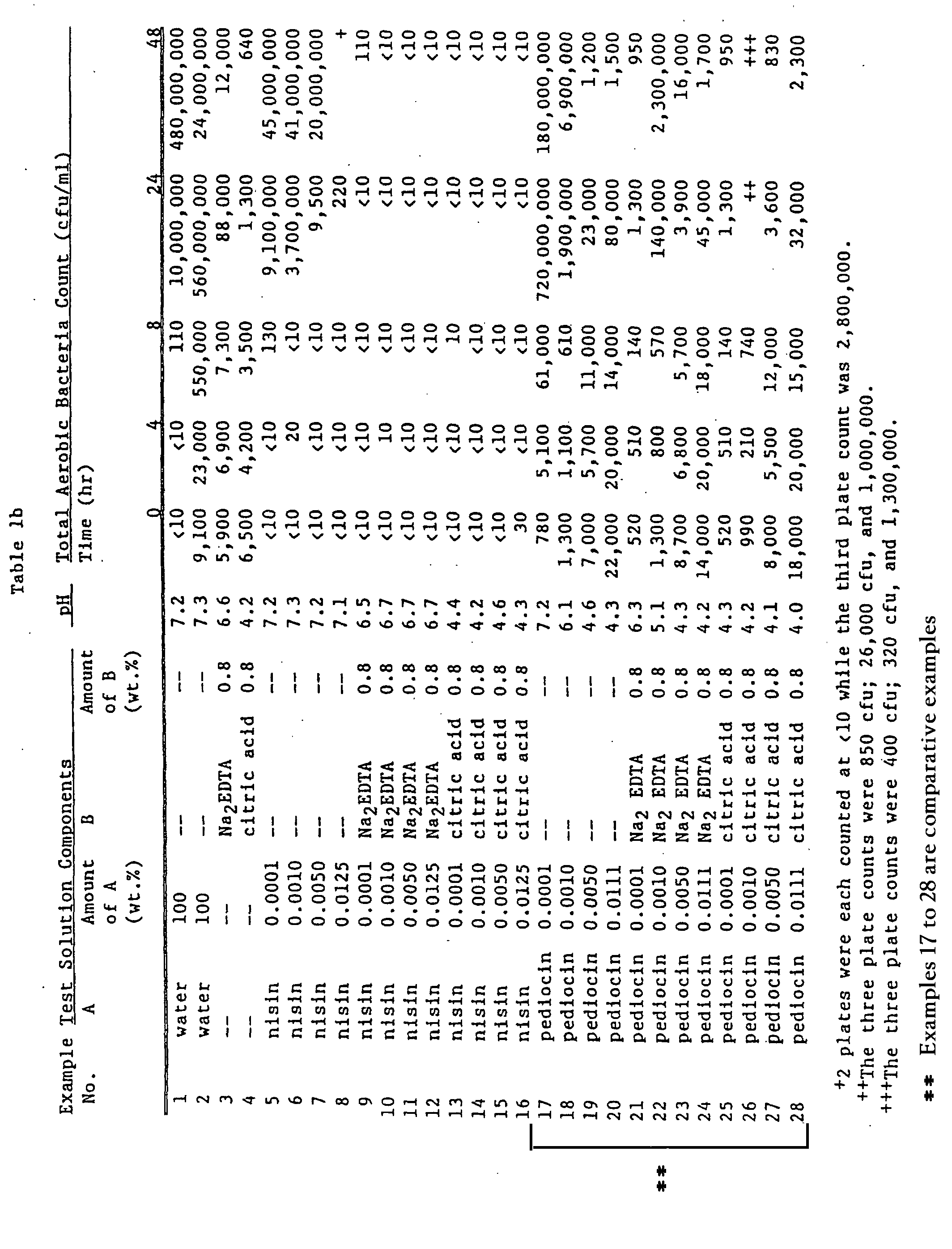

Examples 1 and 2 are control examples (not of the invention). In Examples 1 and 2 the test solutions were deionized water, which were mixed with broth as described above (except Example 1 was not innoculated) and run as controls. Example 2 was innoculated and run as controls. The test results indicate that for the uninnoculated control (Example 1) there were no significant levels of Listeria present during the 48 hour test period and that growth of total aerobic bacteria was unapparent until the 8 hour test period when such growth proceeded at a rapid pace from the 8 hour period through the 24 hour and 48 hour test periods. The innoculated deionized water control (Example 2) exhibited a lag phase from the initial count of about 31,000 cfu per ml through the 4 hour test sample (37,000 cfu per ml) followed by explosive growth at 8 hours (10,000,000 cfu per ml) and 24 hours (300,000,000 cfu per ml), followed by a die off phase at 48 hours (7,700,000 cfu per ml). This die off phase following explosive growth is believed due to factors related to the immediately preceeding high growth such as exhaustion of nutrients or production by the test bacteria (Listeria) of inhibiting waste products. Similarly, total aerobic bacteria counts exhibit a period of slow growth followed by explosive growth and then a "die off". In making the total aerobic bacterial count for Examples 1-28, there was evidence of sporeforming bacilli in many examples. Typically, these organisms represent the difference between the total aerobic and Listeria bacteria counts.

Two different chelating agents, namely (1) the disodium salt of EDTA (Na₂EDTA), and (2) citric acid were tested for antibacterial activity by placing 0.8 weight percent of each in deionized water and innoculating as described above. Example 3 (Na₂EDTA) was found to inhibit growth of Listeria organisms with a maximum number of organisms determined at 24 hours followed by a die off phase at 48 hours. Example 4 (citric acid) was also effective to kill and inhibit Listeria although the level of organisms fluctuated over the 48 hour test period with a high average count of 35,000 cfu per ml reported at 8 hours. With respect to total aerobic bacteria counts, Na₂EDTA was inhibitory with a reported high average plate count of 88,000 cfu per ml at 8 hours compared to 560 million cfu per ml for the innoculated control (Example 2). Citric acid was very effective; it produced a steady reduction in the number of total aerobic bacteria over the test period from an initial average count of 6,500 cfu per ml to a low of 640 cfu per ml at 48 hours. The effectiveness of citric acid may have been due at least in part to a pH effect where low pH may restrict bacterial growth as known in the art.

In Examples 5-16 test solutions utilized various concentrations of nisin alone and with citric acid and Na₂EDTA. The average Listeria plate counts for all of these examples were less than 10 cfu per ml for all test periods including the zero hour test conducted immediately following innoculation. Example 2 (the innoculated control) as well as Examples 3 and 4 (containing only chelating agents) were all determined as having average Listeria counts of at least 10,000 cfu per ml immediately following innoculation (0 hr). Therefore, it would appear that all of the similarly innoculated samples containing nisin under these test conditions acted to kill substantially all Listeria upon mixing. That no growth of Listeria was seen following the initial test period may indicate either initial eradication or a significant reduction in Listeria followed by very effective inhibition.

The results for the total aerobic bacteria plate counts for Examples 5-16 demonstrate the effect of nisin concentration in the absence and presence of a chelating agent upon total bacteria growth.

Examples 5-8 were test solutions of varying concentrations of nisin (in the form of Nisaplin brand nisin preparation available from Aplin & Barrett Ltd.) in deionized water. Examples 5-8 all show an initial kill of the innoculated bacteria to a level of less than 10 cfu for each concentration of nisin. The total aerobic bacteria counts obtained by plating the innoculated test solutions onto nonselective tryptic soy agar should be a mixture of the intentionally added Listeria and incidental contamination of other microorganisms. By comparison, Examples 2-4 all show initial counts of from 5,900-9,100 cfu per ml, whereas the uninnoculated control (Example 1) had an initial count of less than 10 cfu per ml.

Comparison of Example 5 which contains 1 ppm nisin to the innoculated control (Example 2) shows that nisin is effective, particularly initially to kill aerobic bacteria and control at least initially the growth of aerobic bacteria. However, by the 24 hour test period, the 8 hour average count of 130 cfu per ml for Example 5 had grown explosively to 9,100,000 cfu per ml. This growth is less than that for the innoculated control (Example 2) and about the same as that for the uninnoculated control (Example 1) at 24 hours. Rapid growth of total aerobic bacteria continued in Example 5 resulting in an average plate count of 45,000,000 cfu per ml at 48 hours. Comparison of Example 5 with Examples 6-8 demonstrates that increasing the concentration of nisin will act to delay onset of the explosive growth phase for total aerobic bacteria and reduce the average total aerobic bacteria count for each time period relative to the other test solutions containing less nisin.

Examples 9-12 parallelled Examples 5-8 in nisin concentration, but also contains 0.8 weight percent of a chelating agent, the disodium salt of EDTA (hereinafter Na₂EDTA). The results for the average total aerobic bacteria plate counts are, except for 110 cfu per ml at 48 hours for Example 9, all less than 10 cfu per ml. Thus a comparison of e.g. the 24 hour average bacteria counts for Example 3 (0.8 wt.% Na₂EDTA), Example 5 (1 ppm nisin), and Example 9 (the combination of 1 ppm nisin and 0.8 Na₂EDTA) show average total aerobic bacteria counts of 88,000 cfu per ml, 9,100,000 cfu per ml and <10 cfu per ml, respectively. The surprising reduction of bacteria to less than 10 cfu per ml for the combination of nisin and chelating agent is unexpected. Nisin and chelating agents such as Na₂EDTA appear to act synergistically to reduce the average number of total aerobic bacteria as shown by comparison of the 24 hour and 48 hour data of Examples 3, and 5-12. In Examples 13-16, a second chelating agent was tried in combination with nisin. These examples were similar to Examples 5-8, but each also contained 0.8 weight percent citric acid. Except for an initial average count of 30 cfu per ml for Example 16, all of these test solutions which contained the combination of citric acid and nisin had average total aerobic plate counts of less than 10 cfu per ml. The above test results demonstrate the antibacterial activity of the individual chelating agents and nisin, as well as the surprisingly and unexpectedly good activity of the combination of nisin and chelating agent against total aerobic bacteria levels. This suggests that the combination of nisin with a chelating agent such as Na₂EDTA or citric acid works with an unexpected efficiency to kill and inhibit bacteria and may therefore be applied to a foodstuff to dramatically improve shelf life.

In Examples 17-28 (comparative examples) the test solutions contain various concentrations of pediocin with and without the chelating agents Na₂EDTA and citric acid. The pediocin was added as a preparation which was produced in skim milk according to generally known procedures in the art of preparing pediocin by culturing of Pediococcus acidilacti in skim milk.

Referring to the average Listeria plate counts in Table 1a, it is apparent that pediocin alone kills and inhibit the growth of Listeria, but not as effectively as nisin on an equal weight basis. Results indicate that increasing the concentration of pediocin above 1 ppm generally reduces the number of Listeria in initial counts. Amounts of pediocin at a level of 10 ppm or less inhibited growth of Listeria relative to the innoculated control (Example 2), but Listeria did continue to grow whereas Pediocin at a level of 50 ppm or greater not only seems to reduce the initially reported bacteria counts, but also prevented the Listeria count from increasing by any log factor i.e. the highest average Listeria count during the 48 hour test period was 740 cfu per ml. In Examples 21-24 the test solutions were similar to those for Examples 17-20 except that 0.8 weight percent of the chelating agent Na₂EDTA was present with the various concentrations of pediocin. As demonstrated by comparison of Examples 21-24 to Example 3 and Examples 17-20, the combination of pediocin and Na₂EDTA was unexpectedly effective at killing and inhibiting the growth of Listeria over the 48 hour test period, particularly for low levels of pediocin (10 ppm and less). In Examples 25-28, these test solutions substituted another chelating agent, citric acid, for the Na₂EDTA of Examples 21-24. The average Listeria plate counts for the pediocin and citric acid containing solutions are surprisingly low and indicate a synergistic efficiency in killing and inhibiting Listeria bacteria. For example, a comparison of the average plate counts at 24 hours follows: for 0.8 weight % of citric acid alone - 70,000 cfu per ml (Example 4); for 1 ppm pediocin - 170,000,000 cfu per ml, (Example 17); and for the combination of 0.8 wt.% citric acid and 1 ppm pediocin - 10 cfu per ml (Example 25). The 10 cfu per ml result for Example 25 is remarkably low. The logarithmic reductions which may be achieved by the combination of pediocin and chelating agent relative to the individual components alone is significant and unexpected.

With respect to average total aerobic bacteria counts, pediocin appears to delay and reduce growth with higher concentrations of pediocin being more effective, particularly at the 24 and 48 hour test periods. Use of pediocin and the chelating agents Na₂EDTA and citric acid were also effective at inhibiting growth of total aerobic bacteria.

The above Examples 1-28 demonstrate the effectiveness of various antimicrobial agents against pathogenic and aerobic bacteria. Unexpectedly, the combination of nisin and a chelating agent such as Na₂EDTA or citric acid was shown to be surprisingly effective against total aerobic bacteria relative to use of either component alone. Also, unexpected is the surprising effectiveness of the combination of pediocin and a chelating agent such as Na₂EDTA or citric acid relative to the individual components against pathogenic Listeria bacteria.

### EXAMPLES 29-43

Various antimicrobial agents applied to foodstuffs such as wiener sausages were tested for effectiveness against subsequent spoilage. Freshly prepared skinless (casing removed) pasteurized frankfurters typically will have surface bacteria of less than 1,000 cfu per frankfurter directly following vacuum packaging during typical commercial manufacturing processes. When bacterial counts reach the 10⁷ to 10⁸ or higher order of magnitude of cfu per frankfurter, then spoilage is typically visually evident. Common spoilage bacteria for vacuum packaged refrigerated processed meats includes lactobacillus. In particular, the effectiveness of various solutions in protecting foodstuffs dipped therein against growth of pathogenic bacteria such as Listeria monocytogenes was tested.

Frankfurters formed from typical meat emulsion and processing were utilized. Frankfurters were prepared by stuffing a beef/pork meat emulsion into E-Z Peel NOJAX® Brand cellulosic casings (commercially available from Viskase Corporation of Chicago, Illinois) and cooking (approximately 1 hour) in a gas-fired, humidity controlled smoke house at a relative humidity of about 20% until the frankfurters reached an internal temperature of at least 160°F (71°C) under conditions of no added smoke. The casing was then peeled off by a commercial peeler and discarded. The peeled frankfurters were stored in a polyethylene bag at about 4°C briefly until microbiological testing began. The meat emulsion was made from the ingredients listed in Table A by chopping and mixing for about five minutes in a commercial bowl chopper and then mincing through a commercial emulsion mill to achieve a uniform meat emulsion. A chemical analysis of the pasteurized frankfurters revealed 56.9% moisture, 27.2% fat, 12.2% protein, 2.5% ash, 1.90% salt, 65 ppm sodium nitrite and a frankfurter surface pH of 6.40.

**Table A**

| Beef/Pork Emulsion | | |
|---|---|---|
| Ingredients | Weight | |
| | lb. | (Kg) |
| Beef Chuck | 30 | (13.5) |
| Regular Pork Trimmings | 20 | (9) |
| Water/Ice | 12.5 | (5.6) |
| Salt | 1.125 | (0.506) |
| Dextrose | 1.0 | (0.45) |
| Frankfurter Spices | 0.5 | (0.225) |
| Prague Powder (Sodium nitrite) | 0.125 | (0.05625) |

Refrigerated frankfurters stored at 40°F (4°C) were surface coated with test solutions by submerging individual frankfurters in a test liquid for about 30 seconds with as little handling as possible, followed by a period of about 30 seconds during which each frankfurter was held vertically to drain. The coated frankfurters were then innoculated (except for an uninnoculated control) with a mixture of three strains of pathogenic Listeria monocytogenes (which were cultured from strains isolated from either a meat product or meat plant) at a level of approximately 10,000 - 30,000 colony forming units (cfu) per frankfurter. Immediately following innoculation, frankfurters from each example were tested by washing with a sterile buffer which was then plated using methods described above into both nonselective tryptone glucose yeast (TGY) agar and Listeria selective LPM agar and incubated to determine the presence of total aerobic bacteria and Listeria.

Following innoculation, frankfurters were individually packaged in commercially available PERFLEX® 51B Barrier Bags (manufactured by Viskase Corporation of Chicago, Illinois). These bags were evacuated and heat sealed under high vacuum with a commercial evacuator/sealer to provide an oxygen and moisture barrier to the environment. The test samples were stored at ambient temperatures (about 25°C) for 2 days and then tested for total bacteria and Listeria counts as described above for samples following innoculation. The test solutions and bacteria counts are reported in Table 2.

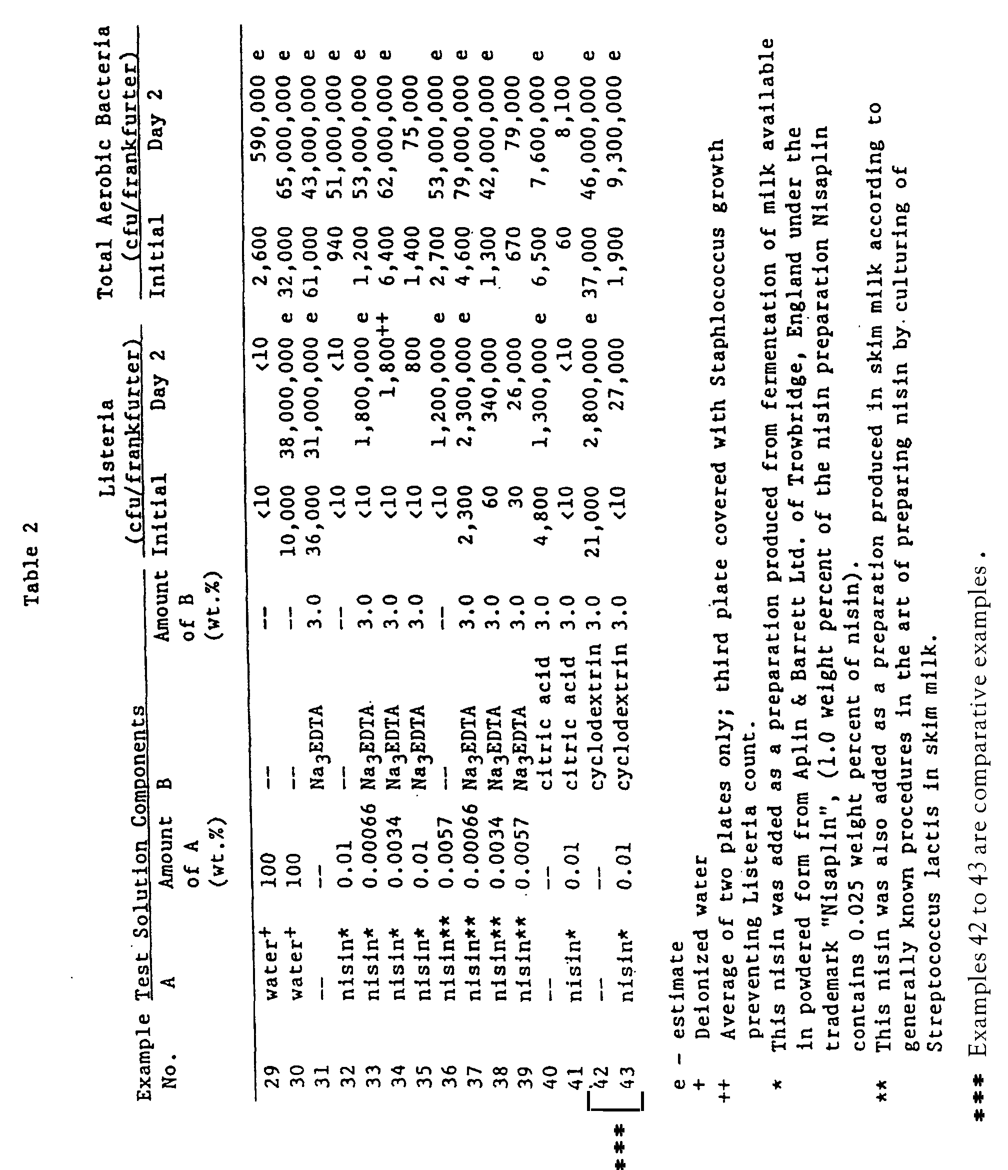

In Examples 29-43, the antimicrobial agents were dissolved or suspended in deionized water. The test solutions reported in Table 2 were all water based.

Example 29 differed from the other examples in that its frankfurters were dipped in a deionized water sample only and were not subsequently innoculated with Listeria organisms. Example 29 was run as an uninnoculated control (not of the invention) to examine the growth of any background organisms already present e.g. on the frankfurters, or introduced by incidental contamination. The results for Example 29 indicate that there were no significant levels of Listeria detected during the two day test period while the average plate count for total aerobic bacteria increased from 2,600 to an estimated 590,000 cfu per frankfurter.

Example 30 was run as an innoculated control (not of the invention) with deionized water as the test solution. This Example was identical to Example 24 except that the dipped frankfurters were innoculated with Listeria organisms. Over the two day test period, growth of Listeria was explosive reaching an estimated average plate count of 38,000,000 cfu per frankfurter. The total aerobic bacteria count showed a similar explosive growth.

In Example 31, a 3 weight percent solution of the trisodium salt of EDTA did not appreciably affect either the Listeria growth or the total aerobic growth on frankfurters over the two day test period.

In Examples 32-35 various concentrations of nisin were tested alone and in combination with the chelating agent Na₃EDTA on frankfurters. In these examples nisin was added as a preparation produced from fermentation of milk. This nisin preparation is commercially available under the brand name "Nisaplin" from Aplin & Barrett of Trowbridge, England. In the test solutions to obtain, for example, 0.01 weight percent of nisin it was necessary to add 0.4 weight percent of the nisin preparation (Nisaplin).

Although all of the test solution coated frankfurters of Examples 30-43 were believed to be initially innoculated with at least about 10,000 cfu per frankfurter of Listeria, the average initial plate counts for Listeria for Examples 32-35 were all less than 10 cfu. These low initial counts are believed to indicate that substantial numbers of Listeria were killed upon contact with the nisin-containing coating. All of the nisin containing coating solutions were effective at reducing growth of Listeria over the two day period with the solutions containing high amounts of nisin being more effective at inhibiting Listeria. Example 32 in which the frankfurter coating contained nisin alone at a test solution level of 100 ppm appeared to be most effective over the two day period. However, this may have been due to either an initial eradication, or a significant reduction followed by very effective inhibition. The test results for total aerobic bacteria suggest that 100 ppm nisin and 3.0 weight percent of Na₃EDTA act synergistically to hold down total aerobic bacterial growth on coated, cooked or pasteurized meat surfaces as seen by comparison of Example 35 with Examples 31 and 32.

In Examples 36-39, a noncommercial nisin preparation was utilized. This nisin preparation was made by culturing Streptococcus lactis in skim milk using commonly known procedures. Example 36 tested frankfurters coated with a solution of nisin at 52 ppm without the chelating agent Na₃EDTA. Comparison of results for Example 36 with Examples 31 and 39 indicate that use of the combination of nisin and the chelating agent Na₃EDTA produced a surprising and unexpected reduction in both average plate counts for Listeria and total aerobic bacteria for the two day test period.

Other chelating agents were examined with unexpectedly good inhibitory and killing action against total aerobic bacteria for the combination of nisin and either citric acid or cyclodextrin. The nisin/cyclodextrin and nisin citric acid combination also demonstrated very good effectiveness against Listeria growth on food surfaces. The cyclodextrin used in these examples was beta-cyclodextrin which is commercially available from American Maize-Products Company of Hammond, Indiana.

Examples 29-43 demonstrate that a bactericidal composition comprising nisin and a chelating agent such as Na₃EDTA, citric acid, or cyclodextrin may be utilized to kill and inhibit pathogenic bacteria and prolong food shelf life. The novel composition comprising a combination of nisin and chelating agent appears to be useful as a food preservative. Here the solution was applied to frankfurters surfaces by dipping, but it is believed that other methods of application may be employed, as discussed previously, such as spraying, mixing or contact with a releasably coated film and that the inventive combination may be employed not only with processed meat, but other foods including fruits, vegetables, grain products, dairy products, eggs, as well as meats, poultry and fish. The composition is believed to have utility for fresh, raw, cooked, pasteurized and sterilized food products. Synergistic efficiency in killing and inhibiting pathogenic and food spoilage organisms is demonstrated by the above test results.

### Examples 44-55

Various antimicrobial agents were applied to frankfurters by dipping each into water based test solutions containing the agents. The dipped frankfurters were innoculated with bacteria and tested for surface growth of bacteria over time. The procedures for this test were substantially the same as those followed for Examples 29-43 above except as indicated below. The meat emulsion utilized here was substantially the same recipe used for Examples 29-43 except that no dextrose was used in the meat emulsion for Examples 44-55. The frankfurter cooking/processing conditions were the same except that the relative humidity was 25% and the frankfurters were cooked until reaching an internal temperature of 162°F (72°C). A chemical analysis of the now pasteurized frankfurters revealed a surface pH of 6.36, and 56.3% moisture, 28.7% fat, 12.4% protein, 2.6% ash, 1.94% salt and 56ppm of sodium nitrite. Although no smoke was added, a smoke analysis was done which indicated 24.6 mg of acid, 0.3 mg phenol and 7.1 mg of carbonyl compounds all per 100g of cooked frankfurter. These amounts were believed due to a residual build-up of smoke constituents in the smokehouse.

The frankfurters were coated in the test solutions by immersion for thirty seconds followed by draining for thirty seconds. The coated frankfurters were then innoculated with a mixture of three strains of pathogenic Listeria monocytogenes by pipetting 0.05 ml (about 100 cells) of innoculum onto each frankfurter. The innoculum was spread with a sterile cotton swab. The frankfurters were then packaged in two layers of four into commercially available PERFLEX® 51B Barrier Bags (manufactured by Viskase Corporation of Chicago, Illinois). These bags of thermoplastic film were evacuated and heat sealed under high vacuum with a commercial evacuator/sealer to provide an oxygen and moisture barrier to the environment. Separate sets of packages were prepared for frankfurters coated with each test solution. Each sealed package of eight frankfurters was stored at about 40°F (4.4°C). Triplicate packages were analyzed initially (Day 0) and at 14, 28 and 42 days of storage. For assaying, one frankfurter was aseptically removed from each package being tested and placed in a bag with 10 ml. of phosphate buffer, then shaken to rinse off bacterial cells adhering to the frankfurter surface. Serial decimal dilutions were plated out on LPM agar and TGY agar as for examples 29-43 above. The arithmatic average plate count results from the three replicate packages tested are reported in Table 3.

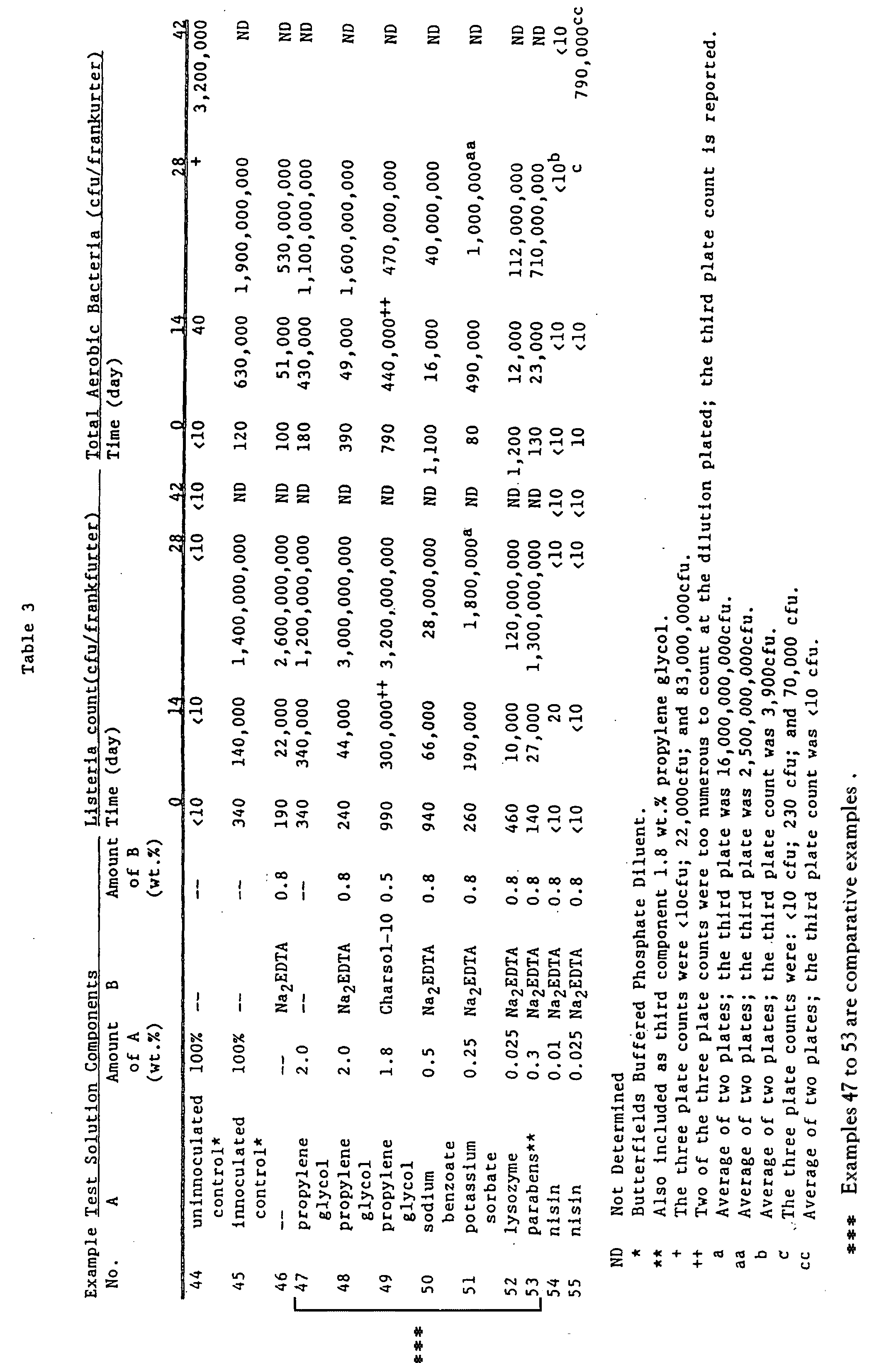

The frankfurters for Examples 44 and 45 were coated by dipping each frankfurter into a solution of Butterfield's buffered phosphate diluent which contained about 42.5 ppm of potassium orthophosphate in deionized water adjusted to a pH of 7.2. Examples 44 and 45 differed in that only the frankfurters of Example 45 were innoculated with Listeria. Therefore, Example 44 served as an uninnoculated control (not of the invention) and Example 45 served as an innoculated control (not of the invention) similar to Examples 29 and 30 above. Butterfield's buffered phosphate diluent was utilized to minimize any disruption due to osmotic forces to any bacteria already present or added. The results indicate no significant levels of Listeria over the 42 day test period for the uninnoculated control while the average plate count for total aerobic bacteria climbed to 3,200,000 cfu per frankfurter by the 42 day assay. Frankfurters from the innoculated control (Example 45) showed rapid growth of Listeria from an initial average plate count of 340 cfu per frankfurter to an average of 1,400,000,000 cfu per frankfurter at 28 days. The bacterial plate count for the 42 day sample was not determined due to excessively high numbers of bacteria as determined by visual examination of the packages which revealed cloudiness of the fluid contained within the evacuated package. This cloudiness is known to those skilled in the art of food microbiology to indicate extremely high levels of bacteria. The excessive bacteria numbers at 42 days were apparent in all the examples except for the uninnoculated control (Example 44) and Examples 54 and 55 discussed below. Results of the total aerobic mesophilic plate count show that the growth of total aerobic bacteria which included both Listeria (a facultative anaerobe) and any incidental bacterial increase from an average of 120 cfu per frankfurter to an average of 1,900,000,000 cfu per frankfurter at the 28 day assay.

In Examples 46-53, water based solutions of the disodium salt of EDTA were tested. Na₂EDTA in solution was tested on frankfurters alone and in combination with propylene glycol, sodium benzoate, potassium sorbate, lysozyme and as a three component system with propylene glycol and parabens. Propylene glycol was also tested alone and with a commercially available liquid smoke sold under the brand name Charsol®, C-10 by Red Arrow Products Co. of Manitowoc, Wisconsin. All of the frankfurters coated with these test solutions showed unacceptably high bacterial growth at the end of the 42 day test period. However, Examples 46, 49-52 were of some benefit in inhibiting the growth of bacteria as shown by the reduced average total aerobic bacteria counts through the 28 day assay relative to the innoculated control, but only the lysozyme, sodium benzoate, and potassium sorbate containing solutions of Examples 52, 50 and 51, respectively, showed any effect at producing logarithmic reductions in average Listeria plate counts at 28 days.

Examples 54 and 55 tested water based solutions containing 100 ppm and 250 ppm of nisin (the nisin was added in the form of Nisaplin) in combination with 0.8 weight percent of Na₂EDTA as an antibacterial coating for pasteurized frankfurters. These coatings were effective against the innoculation of frankfurters with pathogenic Listeria, reducing the initial average plate count to less than 10 cfu per frankfurter and maintaining an average plate count of 20 cfu or less per frankfurter for the entire 42 day test period. Use of Listeria selective LPM agar may reduce, through the selective nature of the agar, the number of Listeria organisms originally present. Therefore, the total aerobic bacteria count was performed using a nonselective standard method agar such as TGY agar. Counts made for total aerobic bacteria include not only Listeria colonies but also any incidental colonies from other bacteria which may grow in competition with or in addition to the Listeria such as Staphlococcus. The average plate counts for total aerobic bacteria for Examples 54 and 55 indicate a surprising logarithmic reduction in organisms relative to the innoculated control of Example 45. Average plate counts were not only 10 or less cfu per frankfurter initially and at 14 days, but the 28 days counts were <10, <10, and 3,900 cfu per frankfurter for Example 54 and <10, 230, and 70,000 cfu per frankfurter for Example 55 compared to 80 million, 440 million and 5.2 billion cfu per frankfurter for the three innoculated control plates (average - 1.9 billion cfu). At 42 days the 100 ppm nisin and Na₂EDTA solution coated frankfurters had an average plate count of less than 10 cfu per frankfurter, while the three plates assayed for the 250 ppm nisin and Na₂EDTA solution coated frankfurters of Examples 55 were counted at <10; 270,000; and 1,300,000 cfu per frankfurter. Thus, the 42 day total aerobic bacteria counts for the innoculated frankfurters of Example 54 and 55 may be favorably compared with the three plate counts of 130,000; 180,000; and 9,200,000 cfu per frankfurter (average - 3.2 million cfu) assayed at 42 days for the uninnoculated control of Example 44. These remarkable results further indicate that compositions containing nisin and a chelating agent may be used to protect against growth of pathogenic and food spoilage bacteria over long periods of time at reduced temperatures. Thus, food preservation may be enhanced with longer times of preservation. The compositions may be used to be sprayed on the foodstuff surface.

## Claims

1. A method of increasing the shelf-life of processed foods by treating a foodstuff surface with a bactericidal composition having an enhanced antimicrobial effect and comprising a combination of nisin and a chelating agent in an amount effective to kill, prevent or inhibit growth of pathogenic Listeria monocytogenes upon contact and to remain sufficiently effective following heat-treatment and processing, wherein said foodstuff comprises cooked and processed foodstuff,
said method comprising coating said foodstuff surface with said composition in an amount sufficient to kill, prevent or inhibit growth of pathogenic Listeria monocytogenes bacteria on the foodstuff surface,
said coating being performed by spraying said composition on said foodstuff surface,
wherein said composition is an acidic solution containing said nisin as a solute or dispersion in concentrations of 5 to 250 ppm by weight of total composition; and
wherein said chelating agent comprises EDTA, citric acid or its their salts, said chelating agent being present in said solution in amounts of from 0.2 to 3.0 weight percent.

2. A method according to claim 1, wherein said composition further comprises additives such as binding agents, buffers, emulsifiers and/or transfer aids.

3. A method according to claim 1 or 2, wherein said foodstuff comprises sausages of all types.

## Patentansprüche

1. Verfahren zur Erhöhung der Haltbarkeit verarbeiteter Nahrungsmittel durch Behandlung einer Nahrungsmitteloberfläche mit einer antibakteriellen Zusammensetzung mit gesteigerter antimikrobieller Wirkung, welche eine Kombination aus Nisin und einem Chelatbildner in einer ausreichenden Menge enthält, um pathogene *Listeria monocytogenes* bei Kontakt abzutöten oder deren Wachstum zu verhindern oder zu inhibieren und um nach Wärmebehandlung ausreichend wirksam zu bleiben, wobei die Nahrungsmittel gekochte und verarbeitete Nahrungsmittel umfassen,
wobei das Verfahren ein Auftragen der Zusammensetzung auf die Nahrungsmitteloberfläche in einer Menge, welche ausreicht, pathogene Bakterien *Listeria monocytogenes* auf der Nahrungsmitteloberfläche abzutöten oder deren Wachstum zu verhindern oder zu inhibieren, umfaßt,
wobei das Auftragen durch Aufsprühen der Zusammensetzung auf die Nahrungsmitteloberfläche durchgeführt wird,
wobei die Zusammensetzung eine saure Lösung ist, welche das Nisin als gelösten Stoff oder Dispersion in Konzentrationen von 5 bis 250 Gew.ppm, bezogen auf die Gesamtzusammensetzung, enthält, und
wobei der Chelatbildner EDTA, Zitronensäure oder ihre Salze umfaßt, wobei der Chelatbildner in der Lösung in Mengen von 0,2 bis 3,0 Gew.-% vorhanden ist.

2. Verfahren nach Anspruch 1, wobei die Zusammensetzung außerdem Additive, wie Bindemittel, Puffer, Emulgatoren und/oder Übertragungsmittel, enthält.

3. Verfahren nach Anspruch 1 oder 2, wobei das Nahrungsmittel Wurstwaren aller Art umfaßt.

## Revendications

1. Procédé pour augmenter la conservabilité des denrées alimentaires préparées par traitement d'une surface d'une denrée alimentaire avec une composition bactéricide ayant un effet anti-microbien accru et comprenant une combinaison de la nisine et d'un agent chélant en une quantité efficace pour tuer, empêcher ou inhiber la croissance de *Listeria monocytogenes* pathogènes par contact et pour rester suffisamment efficace après traitement thermique, lesdites denrées alimentaires comprenant des denrées alimentaires cuites et préparées,
ledit procédé consistant à appliquer ladite composition sur ladite surface de ladite denrée alimentaire en une quantité efficace pour tuer, empêcher ou inhiber la croissance de *Listeria monocytogenes* pathogènes sur ladite surface de ladite denrée alimentaire,
ladite application étant effectuée par pulvérisation de ladite composition sur ladite surface de ladite denrée alimentaire,
ladite composition étant une solution acide comprenant ladite nisine comme un soluté ou une dispersion à des concentrations de 5 à 250 ppm en poids par rapport à la composition totale, et
ledit agent chélant comprenant le EDTA, l'acide citrique ou leurs sels, ledit agent chélant étant présent dans ladite solution en quantités de 0,2 à 3,0 % en poids.

2. Procédé selon la revendication 1, **caracterisé en ce que** ladite composition comprend en outre des additifs tels que des liants, des tampons, des émulsionnants et/ou des adjuvants de transfert.

3. Procédé selon la revendication 1 ou 2, **caracterisé en ce que** ladite denrée alimentaire comprend des saucisses de toutes sortes.
